# EUROPEAN PATENT APPLICATION

(11) **EP 2 012 401 A2**
(43) Date of publication of application: **07.01.2009**
(21) Application number: 08252297.0
(22) Date of filing: 04.07.2008
(51) Int. Cl.: H02G 15/08

(54) **A cable joint**

(30) Priority: 05.07.2007 GB 0712997
(71) Applicant: Tyco Electronics UK Limited, Swindon, Wiltshire SN3 5HH (GB)
(72) Inventor: Pearce, David, Wootton Bassett Wiltshire SN4 8JJ (GB); Pardoe, Richard, East Grindstead West Sussex RH19 4LS (GB)
(74) Representative: Marshall, Caroline

(57) **Abstract**

A cold-applied joint for a paper-insulated lead cable (PILC) including paper insulation impregnated with oil the joint comprising at least a first PILC having an inner conducting element that is conductingly secured to the inner conducting element of a further cable within the hollow interior of a deformable elastomeric sleeve having secured on and encircling its exterior over the length of the said sleeve an in-use rigid member that restrains expansion of the elastomeric sleeve resulting from expansion of oil in the paper insulation of the cable.

## Description

This invention relates to a cable joint, especially of the kind intended for splicing together two cables at least one of which is of the paper-insulated lead covered cable (herein "PILC") type. A PILC typically finds application in the transmission of electric current at so-called "medium" voltages in the approximate range 10KV to 42KV.

In this type of cable an inner conducting core made e.g. of twisted strands of a conducting metal is surrounded along the length of the cable by a cylindrical layer of paper that is impregnated with an oil. This layer is in turn surrounded along the length of the cable by a lead (or other conducting material) jacket or sleeve. The impregnated paper layer acts as a dielectric that insulates the inner conductor from the outer (conductive) jacket.

PILC's are rarely manufactured nowadays, but many tens of thousands of metres of the cable type remain in service around the world. Therefore there remains a need for connecting PILC's together, and for connecting PILC's to other types of cable.

One characteristic of a PILC is that if migration of the oil occurs the dielectric effect of the impregnated paper diminishes dramatically as the paper dries out. Generally this migration effect does not occur over the length of cable that lies away from the cable ends, but when it is required to splice an end of a PILC a potential problem arises in that there exist leakage paths for the oil.

Prior art designs of cable joint for use with PILC's have sought to close off such leakage paths. This aim may be realised through the use of a rigid casing, of the kind described in GB-A-1 485 613, that encloses a joint assembly including various seals. The objective of including the seals is to prevent deleterious migration of the oil from the paper layer.

The arrangement of GB-A-1 485 613 however is complicated. Aside from the fact that this makes the joint expensive to manufacture, assembly of the joint is a lengthy process the steps of which must be completed in the correct order in order to assure leak-proofing of the joint. If the joint is assembled in a "field" situation by an inexperienced fitter therefore there is a danger of the steps not being completed correctly or in the correct order, such that the joint fails in service. Similarly if even one of the many components of the GB-A-1 485 613 joint becomes lost or damaged the integrity of the joint is compromised.

Yet a further problem with the joint of GB-A-1 485 613 is that it does not seek to address the problems that can arise when the heating effect of electrical resistance in the cable of a PILC causes expansion of the oil of the impregnated paper.

Under such circumstances the pressure of oil within a joint can rise sufficiently that the oil is forced to leak away, thereby reducing the dielectric effect as aforesaid.

High oil pressures can also arise when the cable containing the joint lies e.g. on a hillside. The hydraulic head of oil above the joint can then be adequate to promote the above-described migration of oil.

US-A-5,374,784 proposes an arrangement in which the joint between two conducting elements of cables that are spliced together are encircled by an elastomeric sleeve. A heat-recoverable sleeve (i.e. a sleeve made of a material that is pre-stressed to a fitment shape and that on heating reverts to a relaxed or "recovered" state that differs in shape from the fitment shape) is then used to surround the elastomeric sleeve. On heating the heat-recoverable sleeve shrinks to encircle the elastomeric member sufficiently tightly that oil cannot migrate into its interstices. Consequently the oil cannot enter into the material of the sleeve and a known effect of degradation of the sleeve does not, according to the disclosure of US-A-5374784, occur.

The arrangement of US-A-5374784 however suffers from several disadvantages.

Firstly among these the effect of the heat-recoverable sleeve is only of benefit while the pressure of the oil remains low. At higher pressures the oil can force the elastomeric sleeve away from the joint and create voids. The oil can migrate into the voids and thereby cause failure of the insulation.

Secondly of course it is necessary for anyone fitting the joint of US-A-5,374,784 in a "field" situation to carry a source of heat for heating the heat-recoverable sleeve. The need to carry such equipment has safety ramifications and generally complicates the process of creating a joint.

JP-A-2000236619 discloses an arrangement in which an aluminium tape is used in conjunction with a complex structure in order to block oil leakage paths in the joint. A defect of this arrangement is that it is almost entirely rigid. Hence it does not allow for small movements of the parts of the joint without the integrity of the joint becoming compromised. This in turn leads to failure of the dielectric layer in service.

According to the invention in a first aspect there is provided a cold-applied joint for a paper-insulated lead cable (PILC) including paper insulation impregnated with oil the joint comprising at least a first PILC having an inner conducting element that is conductingly secured to the inner conducting element of a further cable within the hollow interior of a deformable elastomeric sleeve having secured on and encircling its exterior over the length of the said sleeve an in-use rigid member that restrains expansion of the elastomeric sleeve resulting from expansion of oil in the paper insulation of the cable.

Such an arrangement is quick and simple to apply even in a field situation. In particular there is no need to use heating equipment since the rigid member of the inventive joint is applied "cold" and is allowed to cure in air. Consequently the assembly steps are simplified.

The structure of the joint of the invention is simple and so the number of components that a fitter needs to carry to splice a pair of cables is small. The risk therefore of loss of or damage to the parts of the joint in transit before assembly is small.

A further advantage of the arrangement of the invention is that the rigid member is essentially, in use, puncture-proof. Thus the joint of the invention once assembled is robust and less prone to damage than prior art arrangements.

Preferably the rigid member comprises a substantially rigidified tape wound about the exterior of the elastomeric sleeve so as to enclose it.

The use of a tape is advantageous since it may be stored eg. in the form of a reel from which it may be dispensed, as required, during assembly of the joint.

The use of a tape that is capable of being rigidified is further advantageous since such a tape is flexible when it is being stored and dispensed; and rigid following creation of the joint. Such an arrangement is particularly convenient.

Preferably in the completed joint the tape comprises a cured, moisture-cure, resin-impregnated fabric.

Such a tape lends itself readily to use in assemblies a joint according to the invention since following application of the tape as the outer layer of the joint it may be left to cure according to a drying process that requires no user intervention. In other words, the installer of the joint need take no steps nor make use of any special equipment for the purpose of causing the initially flexible tape to become rigidified following wrapping or winding of the tape around the joint.

In preferred embodiments of the invention the fabric is impregnated with a resin selected from the list comprising polyurethanes, silyated polyethers, epoxies or silicones.

It is also preferable that the fabric is woven or knitted from a yarn selected from the list comprising glass fibre, carbon fibre, aramid fibre or other similar fibres.

Conveniently the tape attaches at the respective ends of the rigid member to the first and further cables. This arrangement assures sealing of the rigid member such that at either end of the joint of the invention it is impossible for oil under pressure to seep out. Furthermore the sealing of the rigid member to the cables assists in preventing voids from forming under the rigid member.

Attachment of the rigid member may be achieved essentially through the choice of resin impregnated into the fabric of the rigid member. The resin may be chosen so as not only to rigidify the fabric on curing but also to cause it adherence to the cables.

According to a second aspect of the invention there is provided a method of assembling a cold-applied joint for a PILC, the method comprising the steps of:
a) conductingly securing an inner conducting element of a PILC to an inner conducting element of a further cable;
b) causing a deformable elastomeric sleeve to overlie the conducting element of the PILC and the further cable so as to enclose the respective, inner conducting elements;
c) securing on the exterior of the elastomeric member over its length a flexible member containing a curable component that on curing rigidifies the flexible member so as to restrain expansion of the elastomeric sleeve that results from expansion of oil in the paper insulation; and
d) causing or permitting curing of the curable component thereby rigidifying the flexible member.

This method results in a joint according to the first aspect of the invention. The method is particularly convenient since it is simple and quick to put into effect. Furthermore there is no need for the fitter of the joint to carry with him any more specialised equipment than the elastomeric sleeves (one of which may be slid onto one of the cables to be joined, before splicing of the conducting parts of the cables together) together with a reel of the impregnated, moisture-cure tape. Thus the overall inventory of parts needed for the creation of a joint according to the invention is kept to a minimum.

Preferably the step c) includes wrapping multiple turns of a fabric tape impregnated with a moisture-cure resin about the exterior of the elastomeric sleeve so that the turns partially overlie one another over the length of the elastomeric sleeve.

It is also preferable that the step c) further includes causing the fabric tape to engage the respective cables at either end of the elastomeric sleeve.

There now follows a description of a preferred embodiment of the invention, by way of non-limiting example, with reference being made to the accompanying figures in which:
Figure 1 is a perspective view of a simulation of a cable joint according to the invention, part-way through its construction; and
Figure 2 is a perspective view of the simulated joint of Figure 1 after its completion.

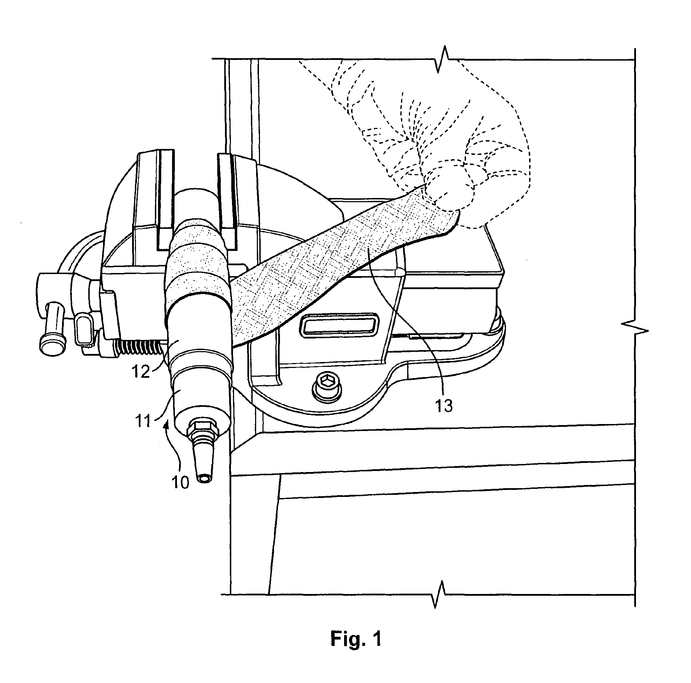

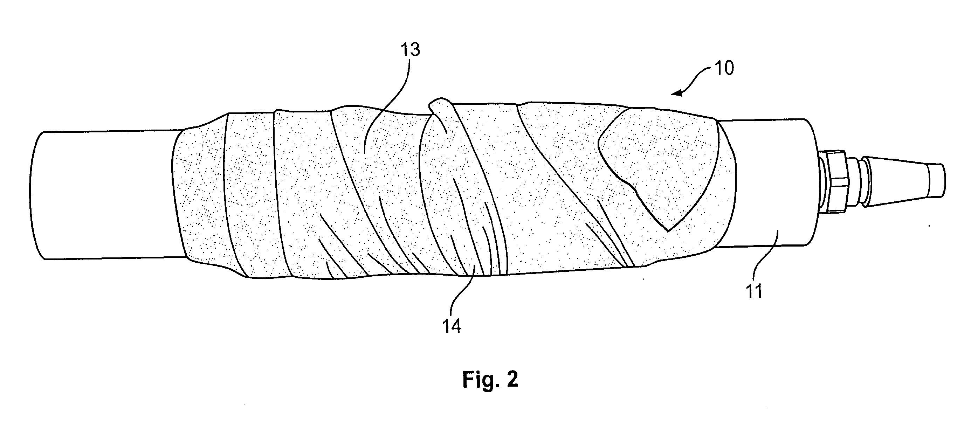

Referring to the drawings there is shown a simulated joint 10 in accordance with the invention. Figure 1 shows the simulated joint in a state of partial completion; and Figure 2 shows the same joint once it is complete.

The joint shown in Figures 1 and 2 is *"simulated"* in the sense that the components of the joint are supported on a rigid mandrel that is of approximately the same diameter as a medium voltage cable of the kind to which the invention is applicable. In practice, in a *"real-life"* situation, the parts of the joint would be formed on a pair of such cables whose conducting inner cores had been spliced together according to a *per se* known technique, rather than on the mandrel that is shown. Thus in the figures the mandrel 11 simulates the presence of the pair of cables.

As explained hereinabove, in a practical situation the cables may both be of the PILC type. The joint of the invention however is equally applicable to arrangements in which a PILC is spliced to another type of medium voltage cable.

Regardless of the precise type of former on which the joint 10 is created, the joint 10 includes as an inner component an elongate, cylindrical, hollow, elastomeric sleeve 12 (Figure 1).

The sleeve 12 overlies the vicinity of the connection between the conducting parts of the respective cables. Thus during assembly of the joint 10 the elastomeric sleeve 12 typically is slid onto one of the cables before the respective conducting inner cores of the cables are sliced together.

Application of the elastomeric sleeve 12 in this fashion may be achieved through the use of an applicator tool. It is expected, however, that in most situations the elastomeric sleeve is sufficiently resiliently deformable that it may be applied by hand onto one of the cables in a compressed or rolled-up condition; and then stretched out to cover the vicinity of the connection between the conducting cores approximately in the manner shown in Figure 1.

Typically the elastomeric sleeve may be manufactured from a material with oil resistant properties such as flurosilicone rubber, epichlorhydrin or acryloritrile butadiene (NBR) rubber.

Regardless of the precise material from which the sleeve 12 is manufactured, it possesses a modulus of elasticity and dimensions that cause it to grip snugly over its entire length around the two cables that are joined together in the joint 10. As a consequence the elastomeric member 12 under normal circumstances prevents leakage or seepage of oil from the paper insulating layer of one or more PILC-type cables that are joined together in the joint 10.

As explained hereinabove, a known phenomenon when cables operate at high temperature involves the expansion of oil in the insulating paper layer such that it could force a sealing element forming part of a joint away from the cables. The resulting voids can cause migration of the oil out of the insulating paper such that the dielectric characteristic of the latter diminishes dramatically. When that happens failure of the joint is a distinct possibility.

This problem is entirely obviated in the joint 10 of the invention through the application of a rigid member 14 that encircles the elastomeric sleeve 12 over the length of the sleeve.

As shown in the figures, the rigid member 14 is applied as a flexible tape 13 that is wound around the joint 10 over a length extending from one end of the elastomeric sleeve 12 to the other.

In practice the tape 13 is applied at one end to the exterior insulative material of one of the cables. Respective turns of the tape 13 are then lain one partly overlying another until the tape 13 reaches the exposed, outer, insulative layer of the other of the cables at which location the tape 13 is terminated by attachment to the insulative layer in question.

As shown in Figure 1, the tape 13 is in a preferred method of creating the joint 10 wrapped tightly by hand around the vicinity of the joint.

The tape 13 is a woven or knitted fabric impregnated with a moisture-cure resin such as but not limited to glass fibre woven fabric with a moisture-cure polyurethane resin. Other forms of tape are possible within the scope of the invention, but the illustrated woven or knitted tape is preferred.

This resin has the characteristic of curing in air, at ambient temperatures, through a drying process. As it does so the resin rigidifies the fabric of tape 13 so as to create the rigid member 14 forming part of the joint 10.

Once so formed the rigid member 14 serves a primary purpose of preventing lifting of the elastomeric member 12 away from the cables over which it lies.

Thus even if the cables operate at high temperature there is no danger of leakage paths for oil arising in the joint 10 of the invention.

A secondary advantage of the incorporation of the rigid member 14 is that the joint 10 is to some degree *"armoured"* such that it is essentially puncture-proof in use. At the same time, the presence of the elastomeric sleeve 12, that is resiliently deformable, allows for a small amount of *"give"* in the cables, especially during curing of the resin. As a consequence the fitter of the joint 10 may position it correctly eg. in a cable conduit or other structure while the resin is curing without fear that the integrity of the joint 10 would become compromised as a result of moving the cables at such a time.

As mentioned herein, the joint 10 of the invention is *"cold-applied".* This means that there is no need for a heating step in order to effect curing of the resin impregnated into the fabric 13. This makes assembly of a large number of joints a particularly convenient exercise since the fitter needs only to leave the joints to cure after they have been formed in the fashion shown in the figures, and no further finishing steps are needed. As a consequence the fitter can create a large number of the joints during a working day.

The components needed to create the joints 10 may readily be carried by the fitter to the work site. Indeed, it is necessary only for the fitter to have a stock of the elastomeric sleeves 12 and a reel of the impregnated fabric tape 13 in order to create a large number of the joints 10. The impregnated tape 13 may be stored in a container that prevents leakage of the resin and that maintains the resin in a moist state until dispensing of the fabric occurs. As an alternative the tape 13 may be stored and dispensed initially in a dry state. The fitter may carry with him a bottle or other container of the resin by means of which he may then impregnate the fabric in preparation for its wrapping around the partially completed joint in the manner exemplified in Figure 1.

Overall the joint and method of the invention provide a convenient, reliable solution to a problem that has for long existed in the art of cable splicing. That the solution is provided at minimal cost using a small number of components is an additional benefit of the invention.

## Claims

1. A cold-applied joint for a paper-insulated lead cable (PILC) including paper insulation impregnated with oil the joint comprising at least a first PILC having an inner conducting element that is conductingly secured to the inner conducting element of a further cable within the hollow interior of a deformable elastomeric sleeve having secured on and encircling its exterior over the length of the said sleeve an in-use rigid member that restrains expansion of the elastomeric sleeve resulting from expansion of oil in the paper insulation of the cable.

2. A joint according to Claim 1 wherein the rigid member comprises a substantially rigidified tape wound about the exterior of the elastomeric sleeve so as to enclose it.

3. A joint according to Claim 2 wherein the tape comprises a cured, moisture-cure, resin-impregnated fabric.

4. A joint according to Claim 3 wherein the fabric is impregnated with a resin selected from the list comprising polyurethanes, silyated polyethers, epoxies and silicones.

5. A joint according to Claim 3 or Claim 4 wherein the fabric is woven or knitted from a yarn selected from the list comprising glass fibre, carbon fibre, aramid fibre or similar.

6. A joint according to any of Claims 2 to 5 wherein the tape attaches at the respective ends of the rigid member to the first and further cables.

7. A method of assembling a cold-applied joint for a PILC, the method comprising the steps of:
a) conductingly securing an inner conducting element of a PILC to an inner conducting element of a further cable;
b) causing a deformable elastomeric sleeve to overlie the conducting element of the PILC and the further cable so as to enclose the respective, inner conducting elements;
c) securing on the exterior of the elastomeric member over its length a flexible member containing a curable component that on curing rigidifies the flexible member so as to restrain expansion of the elastomeric sleeve that results from expansion of oil in the paper insulation; and
d) causing or permitting curing of the curable component thereby rigidifying the flexible member.

8. A method according to Claim 7 wherein the step c) includes wrapping multiple turns of a fabric tape impregnated with a moisture-cure resin about the exterior of the elastomeric sleeve so that the turns partially overlie one another over the length of the elastomeric sleeve.

9. A method according to Claim 8 wherein the step c) further includes causing the fabric tape to engage the respective cables at either end of the elastomeric sleeve.

10. A joint generally as herein described, with reference to and/or as illustrated in the accompanying figures.

11. A method generally as herein described, with reference to and/or as illustrated in the accompanying figures.
